# EUROPEAN PATENT APPLICATION

(11) **EP 3 508 555 A1**
(43) Date of publication of application: **10.07.2019**
(21) Application number: 18290004.3
(22) Date of filing: 09.01.2018
(51) Int. Cl.: C09K 17/00, E02D 3/12, E02D 5/36, C09K 17/40

(54) **METHOD FOR THE PRODUCTION OF UNDERGROUND FOUNDATIONS**

(71) Applicant: Holcim Technology Ltd, 8645 Jona (CH)
(72) Inventor: Watt, Olivier, 38110 Saint Jean de Soudan (FR)
(74) Representative: Keschmann, Marc

(57) **Abstract**

Method for the production of underground foundations by cement deep mixing that comprises the following steps:
(a) advancing a mixing tool into the soil with an auger type machine,
(b) injecting a hydraulic binder into the soil and mixing the hydraulic binder with the soil by means of the mixing tool in order to obtain a mixture of soil and the hydraulic binder,
where the hydraulic binder contains cement, an organic compound, and optionally one or several chemical admixtures.

## Description

### Field of the invention

The invention relates to a method for the production of underground foundations by cement deep mixing.

### Background of the invention

Deep cement mixing is a civil engineering deep foundation technique where a binder material, typically cement, is injected into the ground for ground stabilization and land reclamation. It is typically used to obtain an increased load bearing capability of the existing soil, e.g. in order to bear buildings and other structures.

Deep cement mixing involves first drilling into the soil where binder material is later to be injected. Typically this is done by vertically advancing a mixing tool into the soil with an auger type machine in order to penetrate deeply but narrowly into the soil. Upon reaching the required depth, cement or sometimes another binder material is injected into the soil and mixed in situ by means of the mixing tool. As the cement-soil mix begins to harden, further cement is added while the mixing tool is retracted so that a column of soil mixed with the cement grows until it reaches all the way up to the start. Finally the machinery is moved to the location of the next column where the process is repeated in order to form another column. Once fully hardened these columns are then able to bear much higher loads than the original soil upon which one wants to build. The cement may be added in the form of a liquid slurry, or injected directly as a powder when the moisture content of the soil is sufficient to enable the soil-cement mixture to harden.

Such a process has however some limitations. In many cases, strength and especially strength development of the underground foundation elements needs to be optimized. It is known that increasing the amount of cement that is added to and mixed with the soil, results in an increased compressive strength, both the early and the late compressive strength, which is favorable for the foundation's load bearing capacity. However, increasing the portion of binder in the soil-binder mix results in an increased cost and in an elevated operating expense and time.

Therefore, the invention aims at improving a method for the production of underground foundations by cement deep mixing such that the amount of binder can be reduced without impairing the strength development, in particular the early strength, of the foundation and/or such that the strength development, in particular the early strength, can be increased without increasing the amount of binder added to the soil.

Further, there is a need to have solutions that can be used with different kinds of cements and different types of soil, while providing constant results regarding strength development.

### Summary of the invention

In order to solve these objectives, the invention provides a method for the production of underground foundations by cement deep mixing that comprises the following steps:
(a) advancing a mixing tool into the soil with an auger type machine,
(b) injecting a hydraulic binder into the soil and mixing the hydraulic binder with the soil by means of the mixing tool in order to obtain a mixture of soil and hydraulic binder,
where the hydraulic binder contains cement, an organic compound, and optionally one or several chemical admixtures.

This invention, as presented in the following detailed description and in the examples, enables to increase the strength at 1 day and at 28 days of underground foundations that contain a mixture of hydraulic binder and soil.

Furthermore, the invention has proven to be effective on different types of soil and when different types of cements are used for the preparation of the hydraulic binder.

The advantages of the present invention are mostly first related to the improved strength development of the foundations. Such an increase translates for the end-user in a reduction of the total cost related to the construction of the foundations, for a given mass and height of the construction that will later be erected above ground. The end-user may for example save costs by reducing the amount of binder injected with the soil, or may reduce the size or number of foundation elements for a given structure.

Also, foundation elements that have a higher strength are able to increase the bearing capability of the soil, which then enables to increase the size and mass of the construction that will then be erected above ground.

Reducing the size and number or size of foundation elements also contributes to shortening the duration of the construction.

### Detailed description of the invention

The hydraulic binder of the present invention is a composition that contains cement, optionally water, an organic compound and optionally chemical admixtures. If the binder material contains water, it is then called a cement slurry. Alternatively, when the soil contains enough water, the hydraulic binder may be injected in the form of a powder.

Preferably, the cement is the only hydraulically effective binder component of the hydraulic binder.

Any cement as described in the cement standard EN 197-1 may be suitable. These cements are also described as hydraulic binders, as they react chemically when mixed with water and harden into a rock-like material. The cement preferably comprises or is comprised of ordinary or white Portland cement. Portland cement as used in the invention may be any type of Portland cement. Suitable cements are the cements described in the European Standard NF EN 197-1 of April 2012 or mixtures thereof, preferably cement of the types CEM I, CEM II, CEM III, CEM IV or CEM V. The cement may also be a mixture of Portland cement and one or several of any mineral component, such as ground granulated blast furnace slag, fly ash, limestone, burnt oil shale, calcined clay, or any other mineral component that has pozzolanic reactivity. The mineral additions, typically between 10 and 50 wt.-% of the total binder weight, are in most applications ground granulated blast furnace slag, fly ash, pozzolans, ground limestone or mixtures thereof.

Good results have been shown with CEM I, blended cements that contain fly ash, a CEM II, and with a cement that contains high amounts of blast furnace slag, a CEM III, as illustrated in the examples.

The cement slurry is characterized by a water-cement ratio. The water-cement ratio is an important feature of the slurry as enough water needs to be added for the hydration reactions to occur, and for the slurry and the final cement-earth composition to be sufficiently fluid. The preferred water-cement ratio of the cement slurry is between 0.6 and 1.5, more preferentially between 0.6 and 1.2, and even more preferentially between 0.6 and 1.0.

The hydraulic binder contains an organic compound and optionally contains chemical admixtures.

The organic compound may be added during the preparation of the cement slurry, either directly mixed with the other components, or pre-diluted in the water.

The organic compound may by in liquid or in powder form.

The organic compound is preferentially an alkanolamine, i.e. an organic molecule that contains both at least one nitrogen atom and at least one hydroxyl group. Preferentially, the alkanolamine is N,Nbis-(2-hydroxyethyl)-2-propanolamine) (DEIPA), N,Nbis-(2-hydroxypropyl)-N-(hydroxyethyl) amine (EDIPA), diethanalomine (DEA), triethanalomine (TEA), triisopropanolamine (TIPA), triethylenepentamine (TEPA), hydroxyethyldiethylenetriamine (HEDETA) or aminoethylethanolamine (AEEA) or a combination thereof. Even more preferentially, the alkanolamine is triethanalomine (TEA), triisopropanolamine (TIPA), or N,Nbis-(2-hydroxyethyl)-2-propanolamine) (DEIPA).

The organic compound may be added during the production process of the cement. Preferentially, the organic compound is added before or after the grinding of the cement components, or during the blending of the pre-ground cement components.

Its effective dosage is expressed in weight percentage of the amount of cement, and is preferentially between 0.05 and 0.5 wt.-% of the weight of cement, more preferentially between 0.05 and 0.35 wt.-% of the weight of cement.

The chemical admixtures can be one or several chemical admixtures as disclosed in the standard EN 934-2:2009. In particular, the chemical admixture may be a water reducer.

A water reducer makes it possible to reduce the amount of mixing water for a given workability by typically 10-15%. By way of example of water reducers, mention may be made of lignosulphonates, hydroxycarboxylic acids, carbohydrates, and other specific organic compounds, for example glycerol, polyvinyl alcohol, sodium alumino-methyl-siliconate and sulfanilic acid as described in the Concrete Admixtures Handbook, Properties Science and Technology, V.S. Ramachandran, Noyes Publications, 1984.

Superplasticisers belong to a new class of water reducers and are capable of reducing water contents of mixing water, for a given workability, by approximately 30% by mass. By way of example of a super-plasticiser, the PCP superplasticisers may be noted. The term "PCP" or "polyoxy polycarboxylate" is to be understood according to the present invention as a copolymer of acrylic acids or methacrylic acids and their esters of polyoxy ethylene (POE).

The hydraulic binder of the invention is then blended with soil in a deep cement mixing process. The cement-soil weight ratio in the mixture of soil and hydraulic binder is between 6 and 20 wt.-%, preferentially between 8 and 18 wt.-%, even more preferentially between 10 and 16 wt.-%.

Any kind of soil may be suitable, and particularly good results were achieved with soils that belong to the A-2 or A-3 type, according to the AASHTO M145 soil classification.

The method of the invention results in the manufacturing of underground foundations, and is particularly suited for producing columns of hardened cement and soil.

### Examples

The invention will now be described in more detail by reference to the following examples.

### Materials

In the following examples, different cements are used, and their composition and manufacturing plant of origin are summarized in the following table-.

| **Binder name** | **Content and type of mineral component** | **Plant of origin** |
|---|---|---|
| CEM I - BG | - | Meghnaghat, Bangladesh |
| CEM II - BG | 22 wt.-% of fly ash | Meghnaghat, Bangladesh |
| CEM III - BG | 36 wt.-% of ground granulated blast furnace slag | Meghnaghat, Bangladesh |
| CEM I - ID | - | Narogong, Indonesia |
| CEM II - ID | 22 wt.-% of fly ash | Narogong, Indonesia |

Two types of soil are also used. According to the AASHTO M145 soil classification:
- one soil belongs to the A-3 type (main constituent: fine sand), and
- the other soil belongs to the A-2 type (silty of clayey gravel and sand)..

### Methods

### Strength measurement of cements

The strength of the cement is assessed by preparing a mortar, i.e. a composition containing cement, sand and water, as described in the cement standard NF EN 196-1 published in September 2016.

When a chemical additive is included, it is pre-diluted in the water that is used for the preparation of the mortar.

### Strength measurement of binder and soil compositions

The strength measurement tests are carried out with a dry soil, which means that the hydraulic binder is added in the form of a cement slurry.

The strength of cement and soil mixtures is measured according to the following method:
1. Soil, cement and water are separately weighed. If the test includes a chemical additive, it is pre-diluted in the cement.
2. The soil and cement are blended together in a bowl, using a trowel.
3. Half of the soil and cement blend as prepared in step 2 is then mixed during 15 seconds with half the water weighed in step 1, using a mixer as described in EN 196-1 (September 2016).
4. The remaining soil and cement blend prepared in step 2, and the remaining water of step 1 are added to the mixing bowl, and the cement and soil composition is further mixed for an additional 5 minutes.
5. The composition obtained in step 4 is placed in cubes of 15x15x15 cm, in three layers. Each layer is compacted using a square rammer of 8x8 cm, 15 times for each layer.
6. Each cube is covered by a plastic film to prevent water from evaporating.
7. After 24 hours at 20°C, the cubes are demolded and immersed in water at 23°C.
8. Strength is measured with a press adapted for 15x15x15 cm cubes, at a speed of 0.1 kN/s for strength values less than 1 MPa, and for 10 kN/s for strength values above 1 MPa.

### Example 1 - Impact of additives on 1 day strength of cement

The following example shows that the addition of TIPA to the pure cement results in most cases in a decrease of 1 day strength between 0 and -13%.

| **Binder** | **Additive** | **Compressive strength at 1 day (MPa)** | **Strength gain due to TIPA addition (%)** |
|---|---|---|---|
| CEM I - BG | None | 14.5 | -0.3% |
| CEM I - BG | 0.2 wt.-% TIPA | 14.1 | |
| CEM III - BG | None | 8.1 | -7.5% |
| CEM III - BG | 0.2 wt.-% TIPA | 7.5 | |
| CEM II - BG | None | 11.1 | -1.8% |
| CEM II - BG | 0.2 wt.-% TIPA | 10.9 | |
| CEM I - ID | None | 16.0 | 0% |
| CEM I - ID | 0.2 wt.-% TIPA | 16.0 | |
| CEM II - ID | None | 9.2 | -13% |
| CEM II - ID | 0.2 wt.-% TIPA | 8.0 | |

### Example 2 - Impact of additives on 1 day strength of soil cement compositions

The impact of additives on strength development of cement and soil blends was investigated.

In a first series of tests, the effect of TIPA on a composition that contains a sandy soil of the A-3 type, according to the AASHTO M145 soil classification, was measured. This soil was slightly humid, as its humidity was of 14.3 wt.-%. The hydraulic binder was added in the form of a cement slurry. The results are summarized in the table below and show that in all cases where data is available, the addition of TIPA increases the strength of the cement and soil composition, contrary to the results shown in the first example.

| **Cement type** | **Cement amount (kg)** | **Water amount (kg)** | **Soil amount (kg)** | **Amount of TIPA (wt.-% of cement)** | **Compress ive strength at 1 day (MPa)** | **Strength gain due to TIPA addition (%)** |
|---|---|---|---|---|---|---|
| CEM III - BG | 2.82 | 2.17 | 17.67 | 0 | 0.65 | NM |
| CEM III - BG | 2.82 | 2.17 | 17.67 | 0.2 | NM* | |
| CEM III - BG | 2.35 | 1.81 | 17.67 | 0 | 0.59 | 37 |
| CEM III - BG | 2.35 | 1.81 | 17.67 | 0.2 | 0.70 | |
| CEM III - BG | 2.16 | 1.66 | 17.67 | 0 | 0.46 | 37 |
| CEM III - BG | 2.16 | 1.66 | 17.67 | 0.2 | 0.63 | |
| CEM III - BG | 1.86 | 1.44 | 17.67 | 0 | NM | NM |
| CEM III - BG | 1.86 | 1.44 | 17.67 | 0.2 | 0.57 | |
| CEM II - BG | 2.16 | 1.66 | 17.67 | 0 | 0.32 | 40 |
| CEM II - BG | 2.16 | 1.66 | 17.67 | 0.2 | 0.45 | |
| CEM II -BG | 1.86 | 1.44 | 17.67 | 0 | NM | NM |
| CEM II - BG | 1.86 | 1.44 | 17.67 | 0.2 | 0.35 | |

| | | | | | | |
|---|---|---|---|---|---|---|
| * NM = Not Measured | | | | | | |

| **Cement type** | **Cement amount (kg)** | **Water amount (kg)** | **Soil amount (kg)** | **Amount of TIPA (wt.-% of cement)** | **Compress ive strength at 28 days (MPa)** | **Strength gain due to TIPA addition (%)** |
|---|---|---|---|---|---|---|
| CEM II - BG | 2.16 | 1.66 | 17.67 | 0 | 1.1 | 45 |
| CEM II - BG | 2.16 | 1.66 | 17.67 | 0.2 | 1.6 | |

A second series of tests was carried out with a different type of soil. Here the effect of TIPA on a composition that contains a sandy soil of the A-2 type, according to the AASHTO M145 soil classification, was measured. This soil has a humidity content of 12 wt.-%. The hydraulic binder was added in the form of a cement slurry.

| **Cement type** | **Cement amount (kg)** | **Water amount (kg)** | **Soil amount (kg)** | **Amount of TIPA (wt.-% of cement)** | **Compress ive strength at 1 day (MPa)** | **Strength gain due to TIPA addition (%)** |
|---|---|---|---|---|---|---|
| CEM III - BG | 2.82 | 2.17 | 17.67 | 0 | 0.82 | 16 |
| CEM III - BG | 2.82 | 2.17 | 17.67 | 0.2 | 0.95 | |
| CEM III - BG | 2.35 | 1.81 | 17.67 | 0 | 0.63 | 25 |
| CEM III - BG | 2.35 | 1.81 | 17.67 | 0.2 | 0.79 | |

This showed that the strength gaining effect of TIPA was independent of the type of soil used.

## Claims

1. Method for the production of underground foundations by cement deep mixing that comprises the following steps:
(a) advancing a mixing tool into the soil with an auger type machine,
(b) injecting a hydraulic binder into the soil and mixing the hydraulic binder with the soil by means of the mixing tool in order to obtain a mixture of soil and the hydraulic binder,
where the hydraulic binder contains cement, an organic compound, and optionally one or several chemical admixtures.

2. Method according to claim 1, wherein the hydraulic binder is injected in the form of a powder.

3. Method according to claim 1, wherein the hydraulic binder is injected in the form of a cement slurry that contains cement, water, an organic compound, and optionally one or several chemical admixtures.

4. Method according to claim 3, wherein the water-cement weight ratio in the cement slurry is between 0.6 and 1.5.

5. Method according to any one of claims 1 to 4, wherein the cement-soil weight ratio in the mixture of soil and the hydraulic binder is between 6 and 20 wt.-%, preferentially between 8 and 18 wt.-%, even more preferentially between 10 and 16 wt.-%.

6. Method according to any one of claims 1 to 5, wherein the organic compound is present in an amount comprised between 0.05 and 0.5 wt.-% of the cement.

7. Method according to any one of claim 1 to 6, wherein the organic compound is an alkanolamine.

8. Method according to claim 7, wherein the alkanolamine is N,Nbis-(2-hydroxyethyl)-2-propanolamine) (DEIPA), N,Nbis-(2-hydroxypropyl)-N-(hydroxyethyl) amine (EDIPA), diethanalomine (DEA), triethanalomine (TEA), triisopropanolamine (TIPA), triethylenepentamine (TEPA), hydroxyethyldiethylenetriamine (HEDETA) or aminoethylethanolamine (AEEA) or a combination thereof.

9. Method according to any one of claims 3 to 8, wherein the organic compound is included in the cement before preparation of the cement slurry.

10. Method according to any one of claims 1 to 9, wherein the soil belongs to the A-2 or A-3 type, according to the AASHTO M145 soil classification.

11. Method according to any one of claims 1 to 10, wherein the chemical admixture comprises a water reducing admixture.

12. Method according to any one of claims 1 to 11, wherein the underground foundation is a column.

13. Use of an alkanolamine, in particular triisopropanolamine (TIPA), in a cement for increasing the 1 day compressive strength of a hardened mixture of soil with the cement.

14. Use according to claim 13, wherein the alkanolamine is selected from the group consisting of N,Nbis-(2-hydroxyethyl)-2-propanolamine) (DEIPA), N,Nbis-(2-hydroxypropyl)-N-(hydroxyethyl) amine (EDIPA), diethanalomine (DEA), triethanalomine (TEA), triisopropanolamine (TIPA), triethylenepentamine (TEPA), hydroxyethyldiethylenetriamine (HEDETA) and aminoethylethanolamine (AEEA) or a combination thereof.

15. Use according to claim 13 or 14, wherein the mixture of soil and cement comprises cement (dry wt.) in an amount of 6 to 20 wt.-%, preferentially 8 to 18 wt.-%, even more preferentially 10 to 16 wt.-%, relative to the soil.

16. Use according to claim 13, 14 or 15, wherein the alkanolamine, in particular triisopropanolamine (TIPA), is present in an amount of 0.05 to 0.5 wt.-% of the cement (dry wt.).

17. Use according to any one of claims 13 to 16, wherein the hardened mixture of soil and cement, in particular in the form of a pillar, is used as an underground foundation.
